# EUROPEAN PATENT APPLICATION

(11) **EP 2 299 078 A1**
(43) Date of publication of application: **23.03.2011**
(21) Application number: 10173240.2
(22) Date of filing: 18.08.2010
(51) Int. Cl.: F01N 3/20, F01N 3/035

(54) **Exhaust gas purification apparatus**

(30) Priority: 02.09.2009 JP 2009202824
(71) Applicant: Kabushiki Kaisha Toyota Jidoshokki, Kariya-shi, Aichi 448-8671 (JP)
(72) Inventor: Kato, Yoshifumi, Kariya-shi Aichi 448-8671 (JP)
(74) Representative: TBK-Patent

(57) **Abstract**

An exhaust gas purification apparatus (101) includes an exhaust gas passage, a first oxidation catalyst (12), a selective catalytic reduction catalyst (15), an oxidation-reduction catalyst (16) and a urea water supply device (19). Exhaust gas is flowed through the first oxidation catalyst (12). The first oxidation catalyst (12) is disposed in the exhaust gas passage. The selective catalytic reduction catalyst (15) is disposed downstream of the first oxidation catalyst (12). The oxidation-reduction catalyst (16) is disposed downstream of the selective catalytic reduction catalyst. The oxidation-reduction catalyst (16) has reducing property and oxidizing property which are influenced by temperature, wherein the oxidizing property of the oxidation-reduction catalyst is greater than the reducing property of the oxidation-reduction catalyst under a temperature that is higher than a temperature under which the reducing property of the oxidation-reduction catalyst is greater than the oxidizing property of the oxidation-reduction catalyst. The urea water supply device (19) supplies urea water upstream of the selective catalytic reduction catalyst (15).

## Description

### BACKGROUND OF THE INVENTION

The present invention relates to an exhaust gas purification apparatus, and more particularly to an exhaust gas purification apparatus using a urea SCR (selective catalytic reduction) catalyst for reducing nitrogen oxides (NO_{X}) contained in exhaust gas discharged from a diesel engine.

A urea SCR system has been developed for reducing NO_{X} contained in exhaust gas discharged from a diesel engine, which uses a SCR catalyst for reducing NO_{X} by reaction thereof with ammonia (NH₃) produced by hydrolyzing urea water thereby to form nitrogen (N₂) and water (H₂O).

In the urea SCR system, the SCR catalyst is disposed in an exhaust gas passage provided between an engine and a muffler. In the exhaust gas passage, an oxidation catalyst and an injection valve are disposed upstream of the SCR catalyst, or on the side of the engine relative to the SCR catalyst. The oxidation catalyst is used for oxidizing hydrocarbons (HC) and carbon monoxide (CO) contained in exhaust gas to water (H₂O) and carbon dioxide (CO₂) and promoting oxidation of nitrogen monoxide (NO) to nitrogen dioxide (NO₂). The injection valve is used for injecting urea water into exhaust gas. A diesel particulate filter (DPF) for collecting particulate matter (PM) such as carbon contained in exhaust gas is also disposed in the exhaust gas passage provided between the engine and the muffler.

Japanese Patent Application Publication 2006-274986 discloses an exhaust gas aftertreatment device including a NO_{X} storage catalyst activated under a high temperature, a DPF disposed downstream of the NO_{X} storage catalyst and supporting a urea SCR catalyst which is activated under a relatively low temperature and a urea water injector disposed between the NO_{X} storage catalyst and the DPF, all of which are housed in one casing thereof. In this exhaust gas aftertreatment device, urea water is injected into exhaust gas by the urea water injector under a low temperature of the NO_{X} storage catalyst that is lower than 400 degrees Celsius and hydrolyzed to NH₃. Then, the produced NH₃ is reacted with NO_{X} contained in exhaust gas in the urea SCR catalyst for reducing NO_{X}. Under a high temperature of the NO_{X} storage catalyst, that is 400 degrees Celsius or higher, NO_{X} contained in exhaust gas is stored in the NO_{X} storage catalyst and reduced.

In the exhaust gas aftertreatment device disclosed in the above-cited Publication, reduction activity of the urea SCR catalyst is decreased under a temperature that is lower than 60 percent of the above temperature of 400 degrees Celsius, or lower than 240 degrees Celsius, so that exhaust gas purification performance by reducing NO_{X} is rapidly decreased. Thus, in the exhaust gas aftertreatment device, the reduction of NO_{X} cannot be performed under a lower temperature where reduction activity of the urea SCR catalyst is decreased. Therefore, the exhaust gas aftertreatment device disclosed in the above Publication does not have a sufficient exhaust gas purification performance by reducing NO_{X} under a lower temperature of exhaust gas where the temperature of the urea SCR catalyst is decreased. The exhaust gas aftertreatment device has a problem in that gas purification can be achieved partially only under a high temperature of exhaust gas.

The present invention which has been made in light of the above problem is directed to providing an exhaust gas purification system that allows an increased temperature range of exhaust gas where NO_{X} contained in exhaust gas is reduced.

### SUMMARY OF THE INVENTION

In accordance with the present invention, an exhaust gas purification apparatus includes an exhaust gas passage, a first oxidation catalyst, a selective catalytic reduction catalyst, an oxidation-reduction catalyst and a urea water supply device. Exhaust gas is flowed through the first oxidation catalyst. The first oxidation catalyst is disposed in the exhaust gas passage. The selective catalytic reduction catalyst is disposed downstream of the first oxidation catalyst. The oxidation-reduction catalyst is disposed downstream of the selective catalytic reduction catalyst. The oxidation-reduction catalyst has reducing property and oxidizing property which are influenced by temperature, wherein the oxidizing property of the oxidation-reduction catalyst is greater than the reducing property of the oxidation-reduction catalyst under a temperature that is higher than a temperature under which the reducing property of the oxidation-reduction catalyst is greater than the oxidizing property of the oxidation-reduction catalyst. The urea water supply device supplies urea water upstream of the selective catalytic reduction catalyst.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view showing a diesel engine equipped with an exhaust gas purification apparatus according to a first preferred embodiment of the present invention;
Fig. 2 is a longitudinal sectional view showing the exhaust gas purification apparatus of Fig. 1; and
Fig. 3 is a longitudinal sectional view showing the exhaust gas purification apparatus according to a second preferred embodiment of the present invention.

### DETAILED DESCRIPTION OF THE PREFERRED EMBODIMENTS

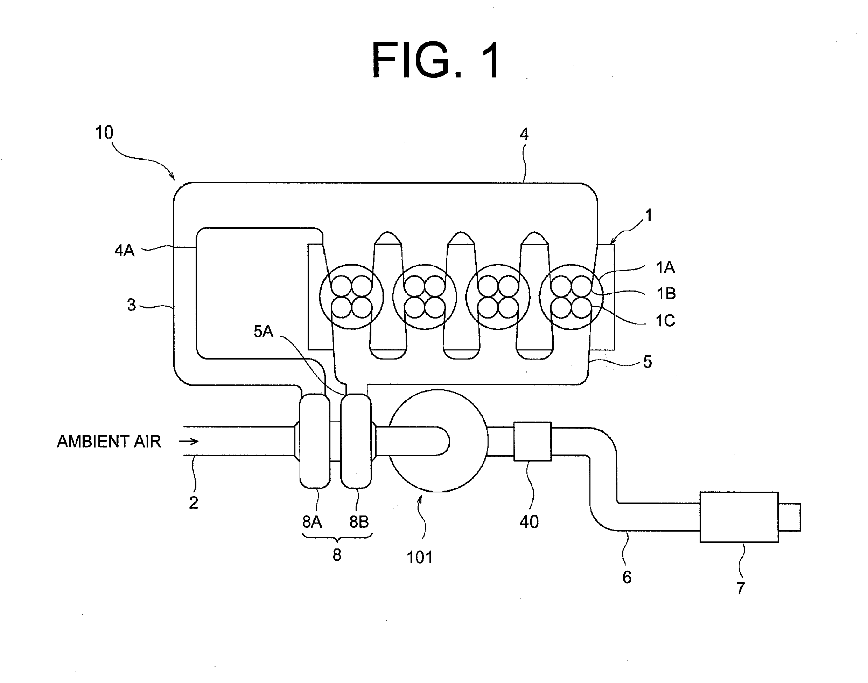

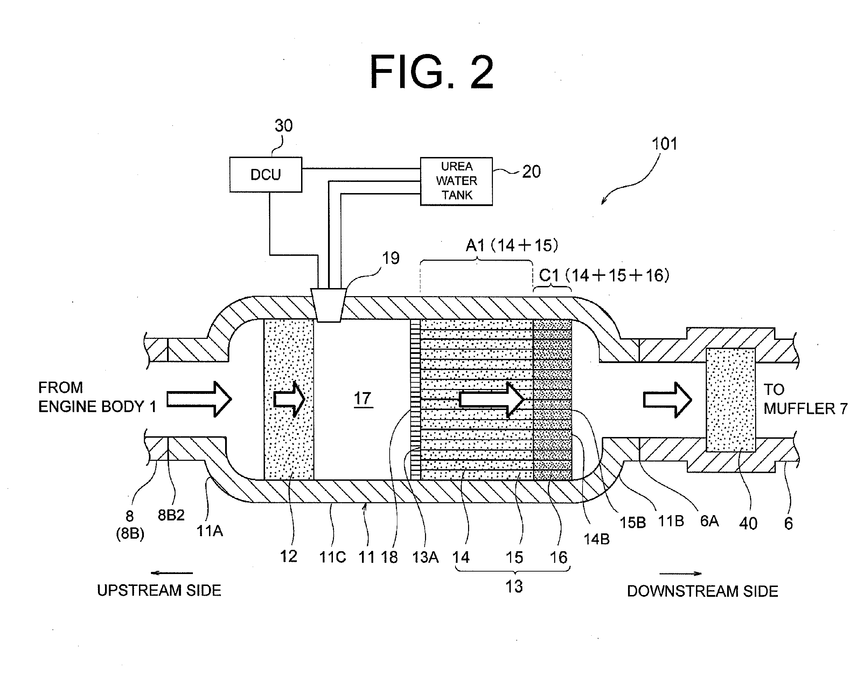

The following will describe a diesel engine and an exhaust gas purification apparatus 101 according to a first preferred embodiment of the present invention with reference to Figs. 1 and 2. In the first preferred embodiment, the following will describe a case where the exhaust gas purification apparatus 101 is used in a diesel engine mounted on a vehicle.

Referring to Fig. 1, the diesel engine has an engine assembly 10 including an engine body 1, an intake pipe 3, an intake manifold 4, an exhaust manifold 5 and a turbocharger 8. The engine body 1 has a plurality of cylinders 1A each having a intake port 1 B and an exhaust port 1C. The intake manifold 4 has an inlet 4A formed at one end thereof and is connected at the other end thereof to intake ports 1 B of the respective cylinders 1A for delivering intake air to the cylinders 1A. The turbocharger 8 includes a compressor housing 8A and a turbine housing 8B; The intake pipe 3 is connected at one end thereof to the inlet 4A of the intake manifold 4 and at the other end thereof to the compressor housing 8A of the turbocharger 8. An intake pipe 2 for introducing ambient air is connected to the compressor housing 8A of the turbocharger 8.

The exhaust manifold 5 is connected at one end thereof to exhaust ports 1C of the respective cylinders 1A for collecting exhaust gas discharged through the exhaust ports 1C and has a outlet 5A at the other end thereof. The turbine housing 8B is connected at the inlet thereof to the outlet 5A of the exhaust manifold 5 at the outlet 5A thereof. The turbine housing 8B is connected to the exhaust gas purification apparatus 101 of a cylindrical shape at the inlet thereof. The exhaust gas purification apparatus 101 is disposed adjacent to the engine body 1. The exhaust pipe 6 is connected at the upstream end portion 6A thereof to the exhaust gas purification apparatus 101 and at the opposite downstream end thereof to a muffler 7 with respect to the flow direction of exhaust gas. The intake pipe 2, the turbocharger 8, the intake pipe 3 and the intake manifold 4 cooperate to form the intake system of the vehicle (not shown). The exhaust manifold 5, the turbocharger 8, the exhaust gas purification apparatus 101, the exhaust pipe 6 and the muffler 7 cooperate to form the exhaust system of the vehicle.

Referring to Fig. 2, the exhaust gas purification apparatus 101 includes a cylindrical housing 11 including an upstream end portion 11A, a downstream end portion 11 B and a cylindrical portion 11C. The upstream end portion 11A of the housing 11 is connected to the outlet 8B2 of the turbine housing 8B of the turbocharger 8, and the downstream end portion 11 B is connected to the upstream end portion 6A of the exhaust pipe 6. The housing 11 is connected internally with the turbine housing 8B of the turbocharger 8 and the exhaust pipe 6.

An oxidation catalyst layer 12 having an oxidation catalyst supported thereon and a diesel particulate filter (DPF) body 14 are disposed in the housing 11 in this order as viewed in the flowing direction of exhaust gas. The DPF body 14 serves as a collector of particulate matter (PM). The oxidation catalyst layer 12 and the DPF body 14 are provided in the form of a layer having a cylindrical shape spanning perpendicular to the axis of the cylindrical portion 11C of the housing 11 so as to seal the inner space of the cylindrical portion 11C. The oxidation catalyst layer 12 and the DPF body 14 are spaced apart from each other thereby to form a space 17 therebetween.

The oxidation catalyst layer 12 has therein an oxidation catalyst supported on a base (not shown) for oxidizing hydrocarbons (HC) and carbon monoxide (CO) to water (H₂O) and carbon dioxide (CO₂) and accelerating oxidation of nitrogen monoxide (NO) to nitrogen dioxide (NO₂). The oxidation catalyst of the oxidation catalyst layer 12 should preferably be made of a material, such as platinum (Pt), palladium (Pd), rhodium (Rh), silver (Ag), iron (Fe), copper (Cu), nickel (Ni), gold (Au) or a combination of at least any two of these materials.

The DPF body 14 is made of porous material such as ceramic for capturing and collecting particulate matter (PM) contained in exhaust gas. The collected PM is burned off in the DPF body 14 for preventing the DPF body 14 from decreasing its filter performance due to the accumulation of collected PM.

The entire DPF body 14 has a SCR catalyst 15 supported thereon by coating and serving as a selective catalytic reduction (SCR) catalyst. Thus, the DPF body 14 is formed integrally with the SCR catalyst 15. Alternatively, the SCR catalyst 15 may be supported only on part of the DPF body 14. The selective reduction catalyst serves to accelerate the chemical reaction between any specific substances, and, particularly a urea SCR catalyst serves to accelerate the chemical reaction between nitrogen oxides (NO_{X}) and ammonia (NH₃) as reduction agent for reducing NO_{X} to nitrogen (N₂) and water (H2O). The SCR catalyst 15 may be made of any oxides of zirconium (Zr), titanium (Ti), silicon (Si), cerium (Ce), tungsten (W), combination of these oxides, or zeolite sieve of molecular porosity-5 (ZSM-5) part of which is metal substituted by such metal as iron (Fe) and copper (Cu). The SCR catalyst 15 has a property to be activated when its temperature is at a predetermined temperature, generally 150 degrees Celsius, or higher. Activation of the SCR catalyst 15 means that the speed of reduction of NO_{X} by NH₃ is increased rapidly.

A noble metal catalyst 16 serving as oxidation-reduction catalyst is supported on the DPF body 14 by coating at a region C1 that is adjacent to the downstream end 14B of the DPF body 14, or the downstream end portion 15B of the SCR catalyst 15, as shown in Fig. 2. In the first preferred embodiment of the present invention, the entire DPF body 14 is coated with the SCR catalyst 15 by means of dipping, and the noble metal catalyst 16 is applied to the SCR catalyst 15 by means of dipping in the region C1 on the downstream side of the DPF body 14. Alternatively, the noble metal catalyst 16 may be supported on the DPF body 14 and the SCR catalyst 15 may be applied to the noble metal catalyst 16. Furthermore, the DPF body 14 may support thereon the SCR catalyst 15 on the upstream side thereof and the noble metal catalyst 16 on the downstream side thereof by coating.

The noble metal catalyst 16 has oxidizing property and reducing property. That is, when the temperature of the noble metal catalyst 16 is higher than a predetermined level, the oxidizing property is greater than the reducing property, so that the noble metal catalyst 16 acts as oxidation catalyst. When the temperature of the noble metal catalyst 16 is at the predetermined level or lower, on the other hand, the reducing property is greater than the oxidizing property, so that the noble metal catalyst 16 acts as reduction catalyst. The noble metal catalyst 16 having such properties made of material such as a platinum (Pt) catalyst (Pt, or composition of Pt and any other noble metal) and a metal oxide catalyst. The above predetermined temperature is in the range from 150 to 250 degrees Celsius if any of the above metal catalyst is used for the noble metal catalyst 16. The temperature at which the property of the noble metal catalyst 16 is changed from the reducing property to the oxidizing property varies depending on the ratio of materials of the noble metal catalyst 16 and the concentration of the noble metal catalyst 16 in the part of the DPF there the noble metal catalyst 16 is supported. Thus, the above predetermined temperature is in the range between 150 and 250 degrees Celsius. The DPF body 14, the SCR catalyst 15 and the noble metal catalyst 16 are formed integrally together thereby to form a catalytic DPF 13, as shown in Fig. 2. Specifically, the DPF body 14 supports thereon only the SCR catalyst 15 in the region A1 shown in Fig. 2, and the DPF body 14 supports thereon the SCR catalyst 15 and the noble metal catalyst 16 in the region C1 shown in Fig. 2.

An injection valve 19 provided by an electromagnetic valve is disposed in the cylindrical portion 11C of the housing 11 at a position between the oxidation catalyst layer 12 and the catalytic DPF 13, as shown in Fig. 2. The injection valve 19 serves as urea water supply device. The injection valve 19 is fluidly connected with a urea water tank 20 disposed in the vehicle (not shown) and operable to inject urea water into the space 17 of the housing 11 (or upstream of the SCR catalyst 15). The injection valve 19 is disposed adjacent to the downstream end of the oxidation catalyst layer 12 and injects urea water into the space 17 adjacent to the downstream end of the oxidation catalyst layer 12. The injection valve 19 is connected electrically with a dosing control unit (DCU) 30, which controls the opening/closing operation of the injection valve 19. The urea water tank 20 has therein a motor pump for supplying urea water stored in the urea water tank 20 to the injection valve 19. The motor pump is connected electrically with the DCU 30, which controls the operation of the motor pump. The DCU 30 may be formed either separately from or integrally with a vehicle electronic control unit (ECU) (not shown). The injection valve 19 should preferably be disposed adjacent to the oxidation catalyst layer 12 on the upstream side of the catalytic DPF 13, the reason for which will be described later.

A cylindrical mixer 18 is disposed on the upstream end surface 13A of the catalytic DPF 13 for spreading substances contained in exhaust gas evenly over the upstream end surface 13A of the catalytic DPF 13. The mixer disclosed in the Japanese Unexamined Patent Application Publication No. 6-509020T or No. 2006-9608 may be used as the mixer 18 of the present invention. The mixer disclosed in the Publication No. 6-509020T is made in the form of a lattice that divides the exhaust gas passage into plural cells so as to cause the exhaust gas flowing through each cell to flow spirally and also to flow toward the adjacent cell. This helps the substances in the exhaust gas to spread evenly in the entire exhaust gas passage. On the other hand, the mixer disclosed in the Publication No. 2006-9608 has plural plates each extending perpendicularly to the flowing direction of exhaust gas, which provides serpentine gas passage to spread the substances contained in the exhaust gas evenly.

An oxidation catalyst layer 40 is disposed in the exhaust pipe 6 provided downstream of the exhaust gas purification apparatus 101. The oxidation catalyst layer 40 supports thereon an oxidation catalyst acting on NH₃ as oxidation catalyst. The oxidation catalyst of the oxidation catalyst layer 40 should preferably be made of material such as platinum (Pt), palladium (Pd), silver (Ag), iron (Fe), copper (Cu), nickel (Ni) and gold (Au). As is apparent from the foregoing description, the exhaust gas purification apparatus 101 of the present embodiment includes an exhaust gas purification device including the SCR catalyst and an exhaust gas purification device including the DPF which are connected integrally with each other and connected to the engine assembly 10 adjacent to the engine body 1.

The following will describe the operation of the exhaust gas purification apparatus 101 and the vehicle engine equipped with the exhaust gas purification apparatus 101 with reference to Figs. 1 and 2. While the engine body 1 is running, intake air is introduced into the compressor housing 8A of the turbocharger 8 through the intake pipe 2. The intake air is pumped by the compressor wheel (not shown) in the compressor housing 8A and then delivered through the intake pipe 3 and the intake manifold 4 to the cylinders 1A of the engine body 1. Diesel fuel injected into highly compressed air in the cylinder 1A is spontaneously ignited and combusted.

Exhaust gas resulting from the combustion of diesel fuel with the intake air is discharged through the exhaust port 1C into the exhaust manifold 5 and the turbine housing 8B of the turbocharger 8. While increasing rotation speed of the turbine wheel (not shown) and the compressor wheel (not shown either) which are connected with each other. The exhaust gas passed through the exhaust gas purification apparatus 101 is flowed through the oxidation catalyst layer 40 and the muffler 7 in the exhaust pipe 6 and then discharged out of the vehicle (not shown).

Referring to Fig. 2, the exhaust gas introduced into the exhaust gas purification apparatus 101 firstly is all flowed through the oxidation catalyst layer 12, so that HC and CO contained in exhaust gas are oxidized to CO₂ and H₂O and part of NO to NO₂ that can be reduced more easily than that of NO. Exhaust gas passed through the oxidation catalyst layer 12 is then flowed through the space 17 and the mixer 18 and into the catalytic DPF 13. While exhaust gas is passed through the catalytic DPF 13, PM contained in exhaust gas is captured and collected by the DPF body 14.

Simultaneously, the motor pump of the urea water tank 20 is operated and the injection valve 19 is opened by the DCU 30 thereby to inject urea water into the space 17. The heat of the exhaust gas in the space 17 serves to accelerate the hydrolysis of the injected urea water to NH₃ and CO₂. The provision of the injection valve 19 at a position adjacent to the oxidation catalyst layer 12 in the space 17 serves to lengthen the time for the hydrolysis of the injected urea water to NH₃ before the urea water reaches the SCR catalyst 15 of the catalytic DPF 13, thus improving the efficiency of hydrolysis of urea water. Thus, the injection valve 19 should preferably be located as far away from the catalytic DPF 13 as possible. In addition, since urea water is injected and hydrolyzed to NH₃ in the space 17 on the downstream side of the oxidation catalyst layer 12, NH₃ is not oxidized by the oxidation catalyst layer 12.

NH₃ produced by the hydrolysis of urea water in the space 17 is flowed through the mixer 18 with exhaust gas, spread by the mixer 18 and introduced into the catalytic DPF 13.

NH₃ contained in the exhaust gas and introduced into the catalytic DPF 13 performs either one of the actions depending on the temperature of the SCR catalyst 15 of the catalytic DPF 13, as will be described under the items (1) and (2). It is noted that the temperature of the SCR catalyst 15 is substantially the same as that of the exhaust gas flowed in the catalytic DPF 13.
(1) Firstly, the case where the temperature of the SCR catalyst 15 is lower than the temperature Ts at which the SCR catalyst 15 is activated, e.g. 150 degrees Celsius, will be described. When the temperature of the noble metal catalyst 16 is below the temperature Tn, the reducing property of the noble metal catalyst 16 becomes greater than oxidizing property thereof, so that the noble metal catalyst 16 acts as reduction catalyst. When the temperature of the noble metal catalyst 16 is higher than the temperature Tn, the oxidizing property of the noble metal catalyst 16 is greater than the reducing property thereof, so that the noble metal catalyst 16 acts as oxidation catalyst. When the noble metal catalyst 16 is made of the above-described materials, the temperature Tn is in the range between 150 and 250 degrees Celsius. The following description will be made with the assumption that the temperature Tn is 200 degrees Celsius. The temperature of the noble metal catalyst 16 is substantially the same as that of the SCR catalyst 15. The temperature of the noble metal catalyst 16 is lower than 150 degrees Celsius, where the reducing property of the noble metal catalyst 16 is greater than oxidizing property whereof, so that the noble metal catalyst 16 acts as reduction catalyst.

In the region A1 of the DPF body 14 where only the SCR catalyst 15 is supported, NO_{X} including NO and NO₂ contained in exhaust gas and introduced into the catalytic DPF 13 is not reduced by NH₃ contained in the same exhaust gas. Thus, the NO_{X} and the NH₃ contained in the exhaust gas are flowed through the region A1 without reaction and introduced into the region C1. In the region C1 where the DPF body 14 supports thereon also the noble metal catalyst 16, NO_{X} is reduced to N₂ by the NH₃. After PM contained in exhaust gas is removed therefrom and NO_{X} contained in the exhaust gas is reduced in the exhaust gas purification apparatus 101, the exhaust gas containing NH₃ which has not been consumed by reduction of NO_{X} is flowed into the exhaust pipe 6 from the exhaust gas purification apparatus 101. Then, the exhaust gas is flowed through the oxidation catalyst layer 40 disposed in the exhaust pipe 6 and the muffler 7 and discharged out of the vehicle (not shown). Since NH₃ contained in the exhaust gas is oxidized in the oxidation catalyst layer 40, no harmful NH₃ is discharged out of the vehicle.
(2) Next, the case where the temperature of the SCR catalyst 15 is higher than the temperature Ts of 150 degrees Celsius will be described. In this case, the SCR catalyst 15 is activated, so that NO_{X} contained in exhaust gas and flowed into the catalytic DPF 13 is reduced to N₂ by NH₃ contained in exhaust gas in the SCR catalyst 15 in the region A1 of the DPF body 14. The noble metal catalyst 16 performs either one of the following actions depending on the temperature, as described in the following items (2A) and (2B).
(2A) When the temperature of the noble metal catalyst 16 is at the temperature Tn of 200 degrees Celsius or lower, the reducing property of the noble metal catalyst 16 is greater than the oxidizing property thereof, so that the noble metal catalyst 16 acts as reduction catalyst. Thus, NO_{X} contained in exhaust gas which is not reduced in the region A1 is reduced by NH₃ contained in the exhaust gas in the noble metal catalyst 16 in the region C1. After PM contained in the exhaust gas is removed therefrom and NO_{X} contained in exhaust gas is reduced in the exhaust gas purification apparatus 101, the exhaust gas containing NH₃ which has not been consumed by reduction of NO_{X} is flowed into the exhaust pipe 6 from the exhaust gas purification apparatus 101. The exhaust gas is flowed in the oxidation catalyst layer 40 disposed in the exhaust pipe 6, where NH₃ contained in the exhaust gas is oxidized and then flowed through the muffler 7 and discharged out of the vehicle (not shown). Thus, no harmful NH₃ is discharged out of the vehicle.
(2B) When the temperature of the noble metal catalyst 16 is higher than the temperature Tn of 200 degrees Celsius, the oxidizing property of the noble metal catalyst 16 is greater than the reducing property thereof, so that the noble metal catalyst 16 acts as oxidation catalyst. Thus, NH3 which has not been consumed by the reduction of NO_{X} in the region A1 is oxidized in the noble metal catalyst 16 in the region C1. Thus, harmful NH3 is removed from the exhaust gas. After PM in exhaust gas is removed therefrom, NO_{X} in exhaust gas is reduced, and NH₃ in exhaust gas is removed therefrom in the exhaust gas purification apparatus 101, the exhaust gas is flowed through the exhaust pipe 6 having therein the oxidation catalyst layer 40 and the muffler 7 and then discharged out of the vehicle (not shown).

In the exhaust gas purification apparatus 101, NO_{X} contained in exhaust gas is reduced as described in the above items (1) or (2), and harmful NH₃ is oxidized to prevent NH₃ from being discharged out of the vehicle. In the catalytic DPF 13, PM collected by the DPF body 14 is periodically burned, so that harmful CO is produced. When PM begins to be burned and during the PM combustion in the catalytic DPF 13, the combustion temperature of PM reaches about 600 degrees Celsius, so that the noble metal catalyst 16 acts as oxidation catalyst. CO generated by burning of PM is oxidized to CO₂ in the noble metal catalyst 16 in the region C1. Therefore, the noble metal catalyst 16 has the oxidizing property for CO generated by burning of PM.

Referring to Fig. 1, exhaust gas which is just discharged from the turbocharger 8 or the engine body 1, whose temperature is hardly decreased, is flowed into the exhaust gas purification apparatus 101 disposed adjacent to the engine body 1. Heat generated by the engine body 1 during the operation is transmitted to the housing 11 (refer to Fig. 2) of the exhaust gas purification apparatus 101 disposed adjacent to the engine body 1 and further to the inside of the housing 11. Referring to Fig. 2, since the inside of the housing 11 and the catalytic DPF 13 are heated by the above-described exhaust gas whose temperature is hardly decreased and the transmitted heat, the temperatures of the inside of the housing 11 and the catalytic DPF 13 are increased quickly. Thus, it takes less time for urea water to be heated to the hydrolysis temperature during a cold start of the engine. Therefore, reduction of NO_{X} may start early during a cold start of the engine, so that the efficiency of reducing NO_{X} is improved.

The exhaust gas purification apparatus 101 according to the first preferred embodiment of the present invention includes the oxidation catalyst layer 12 disposed in an exhaust gas passage through which exhaust gas is flowed, the SCR catalyst 15 disposed downstream of the oxidation catalyst layer 12, the noble metal catalyst 16 having reducing property and oxidizing property and the injection valve 19 for supplying urea water upstream of the SCR catalyst 15. The oxidizing property of the noble metal catalyst 16 is greater than the reducing property under a temperature that is higher than a temperature under which the reducing property of the noble metal catalyst 16 is greater than the oxidizing property. When the temperature of the noble metal catalyst 16 or the temperature of exhaust gas is at a lower level, the reducing property of the noble metal catalyst 16 is greater than the oxidizing property, and reduction of NO_{X} contained in exhaust gas is accelerated by NH₃ produced by hydrolyzing urea water. Therefore, NO_{X} is reduced in the temperature range of exhaust gas where the reducing property of the noble metal catalyst 16 is greater than the oxidizing property, as well as in the exhaust gas temperature range where the SCR catalyst 15 performs reduction, so that the temperature range of exhaust gas where NO_{X} is reducible may be increased.

A temperature under which the reducing property of the noble metal catalyst 16 is greater than the oxidizing property includes a temperature that is lower than a temperature under which the SCR catalyst 15 performs reduction. Thus, when the exhaust gas temperature is in the lower range of temperature, the SCR catalyst 15 does not performs reduction but the noble metal catalyst 16 acts as reduction catalyst to reduce NO_{X} contained in exhaust gas. Therefore, the temperature range of exhaust gas where NO_{X} is reducible may be expanded toward the lower level. Additionally, the exhaust gas purification apparatus 101 which includes the DPF body 14 integrally formed with the SCR catalyst 15 may be downsized. The DPF body 14 is coated with the SCR catalyst 15 and the noble metal catalyst 16 into an integral unit, so that the exhaust gas purification apparatus 101 may be further downsized.

The oxidation catalyst layer 12, the SCR catalyst 15, the noble metal catalyst 16 and the injection valve 19 are accommodated in one housing 11, which also contributes to downsizing of the exhaust gas purification apparatus 101. Since the exhaust gas purification apparatus 101 is mounted to the engine assembly 10, the temperature of exhaust gas discharged from the engine assembly 10 is hardly decreased and the exhaust gas of high temperature is supplied to the exhaust gas purification apparatus 101. Heat generated by the operation of the engine body 1 is transmitted to the housing 11 of the exhaust gas purification apparatus 101. During a cold start of the engine, therefore, the time in which the temperature of exhaust gas is increased to a level where the urea water is hydrolyzed may be shortened. Thus, the exhaust gas purification apparatus 101 may start reducing NO_{X} in a short time from the moment of cold starting of the engine, with the result that the exhaust gas purification performance to reduce NO_{X} may be improved. In the catalytic DPF 13 of the first preferred embodiment of the present invention, the noble metal catalyst 16 is applied by coating to the SCR catalyst 15 which is in turn applied to the DPF body 14 in the region C1 of the DPF body 14 that is adjacent to the downstream end portion 15B of the SCR catalyst 15. In other word, the noble metal catalyst 16 of the first preferred embodiment of the present invention is disposed downstream of the SCR catalyst 15. Thus, the noble metal catalyst 16 is disposed downstream of the SCR catalyst 15 and acts as oxidation-reduction catalyst having reducing and oxidizing properties.

The exhaust gas purification apparatus 102 according to the second preferred embodiment of the present invention differs from the exhaust gas purification apparatus 101 according to the first preferred embodiment of the present invention in that the DPF body and the SCR catalyst are modified over the counterparts of the first preferred embodiment. The following description will use the same reference numerals for the common elements or components in the first and the second embodiments, and the description of such elements or components will be omitted.

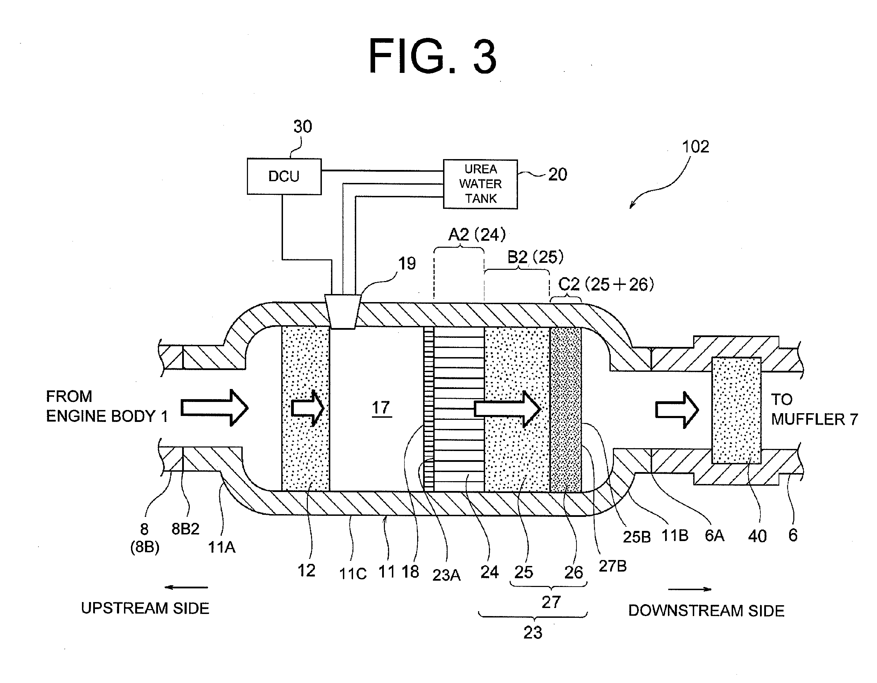

Referring to Fig. 3, the oxidation catalyst layer 12, the DPF body 24 and the composite catalyst layer 27 supporting a plurality of catalysts are disposed in the housing 11 of the exhaust gas purification apparatus 102 in this order. The oxidation catalyst layer 12 and the DPF body 24 are disposed apart from each other with the space 17 formed therebetween. The DPF body 24 and the composite catalyst layer 27 are disposed adjoining each other. The composite catalyst layer 27 is formed substantially in the same manner as the oxidation catalyst layer 12 so as to support on the entire base (not shown) thereof the SCR catalyst 25. The composite catalyst layer 27 supports thereon a noble metal catalyst 26 through the SCR catalyst 25 which is supported thereby adjacent to the downstream end surface 27B of the composite catalyst layer 27 or to the downstream end portion 25B of the SCR catalyst 25. The composite catalyst layer 27 may be formed such that the positions of the SCR catalyst 25 and the noble metal catalyst 26 are inverted. Additionally, it may be so arranged that the composite catalyst layer 27 support thereon on the upstream side thereof the SCR catalyst 25 and on the opposite downstream side thereof the noble metal catalyst 26.

The DPF body 24 and the composite catalyst layer 27 supporting thereon the SCR catalyst 25 and the noble metal catalyst 26 are integrated thereby to form the catalytic DPF 23. As shown in Fig. 3, the catalytic DPF 23 is formed such that the DPF body 24 alone is provided in the region A2, the SCR catalyst 25 is supported by a base (not shown) in the region B2, and the SCR catalyst 25 and the noble metal catalyst 26 are supported by a base (not shown) in the region C2. The mixer 18 is disposed on the upstream end surface 23A of the catalytic DPF 23.

Exhaust gas introduced into the housing 11 of the exhaust gas purification apparatus 102 is flowed into the catalytic DPF 23 after passing through the oxidation catalyst layer 12 and the mixer 18. After PM contained in the exhaust gas flowed into the catalytic DPF 23 is captured by and collected on the DPF body 24, the exhaust gas is flowed through the SCR catalyst 25 and the noble metal catalyst 26 and then discharged out of the exhaust gas purification apparatus 102. Chemical action on the substances such as NO_{X} contained in the exhaust gas flowing through the SCR catalyst 25 and the noble metal catalyst 26 or through the regions B2 and C2 are substantially the same as those on the substances contained in exhaust gas flowing through the regions A1 and C1 of the first preferred embodiment of the present invention.

In the catalytic DPF 23, PM collected on the DPF body 24 is periodically burned. This combustion of PM is done by making use of the heat of exhaust gas available when its temperature is relatively high, so that combustion efficiency is improved. Thus, while PM is burning, the noble metal catalyst 26 acts as oxidation catalyst to oxidize CO generated by combustion of PM. The rest of the structures of the exhaust gas purification apparatus 102 of the second preferred embodiment of the present invention is substantially the same as that of the exhaust gas purification apparatus 101 of the first preferred embodiment and, therefore, the description thereof will be omitted.

Advantages similar to those of the exhaust gas purification apparatus 101 of the first preferred embodiment are obtained in the exhaust gas purification apparatus 102 of the second preferred embodiment. The exhaust gas purification apparatus 102 includes DPF body 24 disposed upstream of the composite catalyst layer 27. The DPF body 24, the SCR catalyst 25 and the noble metal catalyst 26 are formed separately from one another, thereby reducing the influence of heat generated by burning of PM collected on the DPF body 24 and transmitted to the SCR catalyst 25 and the noble metal catalyst 26. This helps to improve the durability of the SCR catalyst 25 and the noble metal catalyst 26. As to the composite catalyst layer 27 of the second preferred embodiment, the noble metal catalyst 26 is applied by coating to the SCR catalyst 25 in the region C2 adjacent to the downstream end portion 25B of the SCR catalyst 25. In other words, the noble metal catalyst 26 of the second preferred embodiment is disposed downstream of the SCR catalyst 25. Thus, the noble metal catalyst 26 is disposed downstream of the SCR catalyst 25 and acts as oxidation-reduction catalyst having both reducing property and oxidizing property.

According to the first and second preferred embodiments of the present invention, the exhaust gas purification apparatuses 101, 102 are disposed adjacent to the engine assembly 10 equipped with the turbocharger 8. Alternatively, the exhaust gas purification apparatuses 101, 102 may be connected directly to the outlet 5A of the exhaust manifold 5 of an engine assembly having no turbocharger, or the exhaust gas purification apparatus 101, 102 may be disposed apart from the engine assembly 10.

Although the housing 11 of the exhaust gas purification apparatuses 101, 102 according to the first and second preferred embodiments of the present invention, has a cylindrical shape, the housing 11 of the exhaust gas purification apparatus according to the present invention is not limited to the cylindrical shape. Alternatively, the housing may have a column shape including a box shape, a spherical shape or an ellipsoidal shape.

According to the first and second preferred embodiments of the present invention, the exhaust gas purification apparatuses 101, 102 include the mixer 18. Alternatively, the exhaust gas purification apparatuses of the present invention may dispense with the mixer 18.

An exhaust gas purification apparatus includes an exhaust gas passage, a first oxidation catalyst, a selective catalytic reduction catalyst, an oxidation-reduction catalyst and a urea water supply device. Exhaust gas is flowed through the first oxidation catalyst. The first oxidation catalyst is disposed in the exhaust gas passage. The selective catalytic reduction catalyst is disposed downstream of the first oxidation catalyst. The oxidation-reduction catalyst is disposed downstream of the selective catalytic reduction catalyst. The oxidation-reduction catalyst has reducing property and oxidizing property which are influenced by temperature, wherein the oxidizing property of the oxidation-reduction catalyst is greater than the reducing property of the oxidation-reduction catalyst under a temperature that is higher than a temperature under which the reducing property of the oxidation-reduction catalyst is greater than the oxidizing property of the oxidation-reduction catalyst. The urea water supply device supplies urea water upstream of the selective catalytic reduction catalyst.

## Claims

1. An exhaust gas purification apparatus (101, 102) comprising:
an exhaust gas passage through which exhaust gas is flowed;
a first oxidation catalyst (12) disposed in the exhaust gas passage;
a selective catalytic reduction catalyst (15, 25) disposed downstream of the first oxidation catalyst (12); and
a urea water supply device (19) supplying urea water upstream of the selective catalytic reduction catalyst (15, 25),
**characterized in that** an oxidation-reduction catalyst (16, 26) is disposed downstream of the selective catalytic reduction catalyst (15, 25), the oxidation-reduction catalyst (16, 26) has reducing property and oxidizing property which are influenced by temperature, wherein the oxidizing property of the oxidation-reduction catalyst (16, 26) is greater than the reducing property of the oxidation-reduction catalyst (16, 26) under a temperature that is higher than a temperature under which the reducing property of the oxidation-reduction catalyst (16, 26) is greater than the oxidizing property of the oxidation-reduction catalyst (16, 26).

2. The exhaust gas purification apparatus according to claim 1, wherein the temperature where the reducing property of the oxidation-reduction catalyst (16, 26) is greater than the oxidizing property of the oxidation-reduction catalyst (16, 26) includes a temperature that is lower than a temperature under which the selective catalytic reduction catalyst (15, 25) performs reduction.

3. The exhaust gas purification apparatus according to claim 1 or 2, wherein the oxidation-reduction catalyst (16, 26) is made of platinum, or metal oxide.

4. The exhaust gas purification apparatus (101) according to any one of claims 1 through 3, further comprising a collector of particulate matter (14) formed integrally with the selective catalytic reduction catalyst (15).

5. The exhaust gas purification apparatus according to claim 4, the selective catalytic reduction catalyst (15) and the oxidation-reduction catalyst (16) are applied by coating to the collector of particulate matter (14).

6. The exhaust gas purification apparatus (102) according to any one of claims 1 through 3, further comprising a collector of particulate matter (24) separately disposed upstream of the selective catalytic reduction catalyst (25).

7. The exhaust gas purification apparatus (101, 102) according to any one of claims 1 through 6, further comprising a housing (11) accommodating the first oxidation catalyst (12), the selective catalytic reduction catalyst (15, 25), the oxidation-reduction catalyst (16, 26) and the urea water supply device (19).

8. The exhaust gas purification apparatus (101, 102) according to any one of claims 1 through 7, wherein a space (17) is formed between the first oxidation catalyst (12) and the selective catalytic reduction catalyst (15, 25), and the urea water supply device (19) supplies urea water to the space.

9. The exhaust gas purification apparatus (101, 102) according to any one of claims 1 through 8, further comprising a mixer (18) disposed between the first oxidation catalyst (12) and the selective catalytic reduction catalyst (15, 25).

10. The exhaust gas purification apparatus (101, 102) according to any one of claims 1 through 9, further comprising a second oxidation catalyst (40) disposed downstream of the oxidation-reduction catalyst (16, 26).

11. The exhaust gas purification apparatus (101, 102) according to any one of claims 1 through 10, wherein the exhaust gas purification apparatus (101, 102) is mounted to an engine assembly (10).
